# EUROPEAN PATENT APPLICATION

(11) **EP 4 123 278 A1**
(43) Date of publication of application: **25.01.2023**
(21) Application number: 21772150.5
(22) Date of filing: 16.03.2021
(51) Int. Cl.: G01L 3/10

(54) **MAGNETOSTRICTIVE TORQUE SENSOR SHAFT AND MANUFACTURING METHOD THEREFOR**

(30) Priority: 18.03.2020 JP 2020047748
(71) Applicant: Usui Co., Ltd., Sunto-gun, Shizuoka 411-8610 (JP)
(72) Inventor: KONDO Hiroaki, Sunto-gun, Shizuoka 411-8610 (JP); FUKUDOME Yoshihisa, Sunto-gun, Shizuoka 411-8610 (JP)
(74) Representative: VKK Patentanwälte PartG mbB
(86) International application number: PCT/JP2021/010596
(87) International publication number: WO 2021/187479

(57) **Abstract**

Provided are a magnetostrictive torque sensor shaft with excellent processing accuracy and stability of quality and a preferred method for manufacturing the shaft. The magnetostrictive torque sensor shaft has an amorphous thermal spray coating on the surface of a substrate made of a metal material, the amorphous thermal spray coating having a magnetostrictive property and being formed by thermal spraying, and the substrate surface being subjected to surface roughening by laser irradiation. The laser irradiation is performed in the surface roughening process prior to the amorphous thermal spraying and in pattern formation process after the thermal spraying.

## Description

### Technical Field

The present invention relates to a magnetostrictive torque sensor shaft having a magnetostrictive region for torque detection on the surface of the shaft (axis of rotation) and a method of manufacturing the magnetostrictive torque sensor shaft. More particularly, the present invention relates to the technique which enables to achieve a high-quality magnetostrictive torque sensor shaft having an amorphous thermal spray coating with a superior magnetostrictive property on the surface of a substrate (a metal material such as aluminum, copper, carbon steel, and stainless steel).

### Background Art

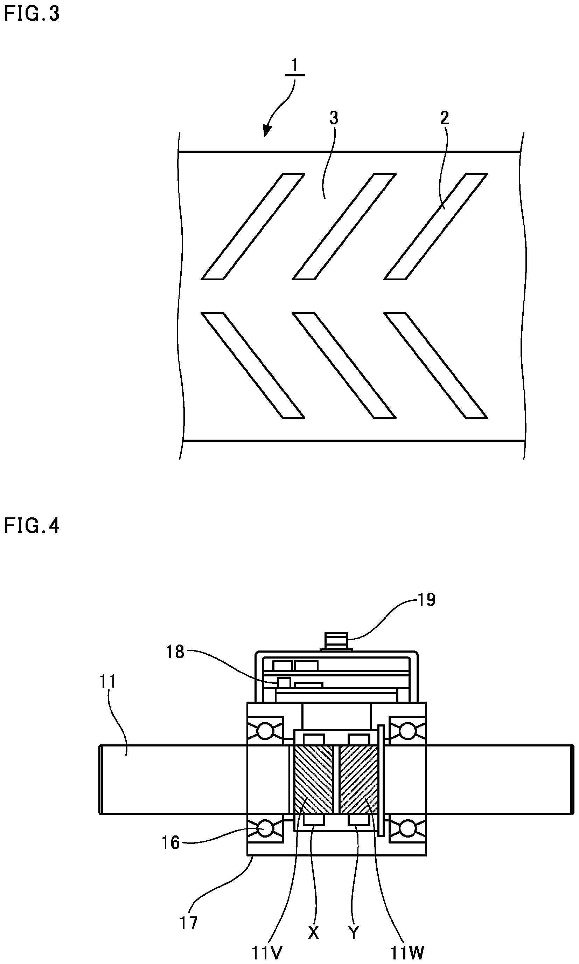

A torque sensor configured to detect torque using a shaft having a magnetostrictive region has a general structure, as shown in Fig. 4, in which a shaft (a torque sensor shaft) 11 that is subjected to torque is supported in a housing 17 by way of bearings 16, and magnetostrictive regions 11V, 11W are formed around the entire circumference (360°) of a section of the shaft 11. Furthermore, coils X, Y are disposed at positions near the respective outer circumferences of the magnetostrictive regions 11V, 11W in the housing 17. Generally, the magnetostrictive regions 11V, 11W have magnetic material that is formed on the periphery of the shaft 11 in helical striped patterns inclined in mutually opposite directions with respect to the axial direction (which is to say, in chevrons), as shown in the figure (in other words, coating films or protrusions of the magnetic substance are formed into multiple helical lines). As shown in the figure, the housing 17 is also provided with an amplifier board 18, a signal line connector 19 and the like.

When a torque acts on the shaft 11 of the general torque sensor shown in Fig. 4, tensile stress and compressive stress are generated in each of the magnetostrictive regions 11V, 11W and, consequently, the magnetic permeability of the magnetostrictive regions 11V, 11W each increases or decreases due to mutually opposite magnetostrictive effects. Thereby, induced electromotive forces are generated in the coils X and Y based on the change in the magnetic permeability, and therefore a voltage output that is proportional to the magnitude of the torque can be obtained by performing DC conversion and differentially amplifying the two. (See, Patent Literatures 1 and 2)

When a metallic glass (amorphous alloy) coating is applied to the magnetostrictive regions 11V, 11W formed on the surface of the shaft of the torque sensor with the above-explained configuration, the coating film is formed on the surface of the shaft by thermal spraying in such a manner that a flame is rapidly cooled. The thermal spraying including rapid cooling of flame refers to one in which a flame with a metal powder is sprayed to melt the metal powder and the flame is cooled by a cooling gas. The film formation by the amorphous thermal spraying mainly requires processes of a surface roughening (shot blasting) prior to thermal spraying, amorphous thermal spraying, masking (sheet attachment), pattern formation (shot blasting), and removal of the masking sheets. The magnetostrictive region having the striped pattern can be obtained through each of the processes.

However, the torque sensor and its manufacturing technique as disclosed in Patent Literatures 1 and 2 have problems as described below.

Generally, shot blasting with aluminum powder is used for the surface roughening process prior to thermal spraying in the method of manufacturing the conventional magnetostrictive torque sensor shaft as described above. A device of performing the shot blasting with aluminum powder has a mechanism in which elevating rods are raised and lowered by elevating motors mounted on a support frame, and blast guns are provided at the ends of the elevating rods, whereby magnetostrictive region formation parts on shaft-shaped workpieces (shafts) are shot blasted by aluminum powder. The shot blasting device is used for the purpose of forming fine roughness on the magnetostrictive region formation part on the shaft-shaped workpiece, prior to amorphous thermal spraying.

However, using the shot blasting with aluminum powder has the following problems (1) to (3):
(1) in the case of the surface roughening process prior to thermal spraying (preprocessing), it takes much time to roughen the surface of a substrate (the surface of the shaft);
(2) in the case of the surface roughening process using the shot blasting, a finished surface of the substrate varies depending on a radiated state of the shot blasting by a shot blasting gun, and as a result, it is difficult to achieve a surface texture with accuracy and stability; and
(3) when the aluminum powder becomes smaller than a predetermined particle size due to abrasion resulting from repeated use of the aluminum powder, a loss of the shot blasting capability is caused, and thus the aluminum powder is disposed of, which is not economical.

In addition, since the techniques disclosed in Patent Literatures 1 and 2 require shot blasting not only in the surface roughening process prior to thermal spraying (preprocessing) but also in the pattern formation process after the thermal spraying (postprocessing) and also include the process of attaching masking sheets, it takes much time to remove the masking sheets and then dispose the discarded sheets removed. With this, it further requires a shot blasting device as well as attachment and removal devices for the masking sheets. Furthermore, it costs a lot to dispose of the used-up aluminum powder and waste. As such, it has been expensive to manufacture the magnetostrictive torque sensor shaft, and besides, it has been not easy to manufacture a magnetostrictive torque sensor shaft with high processing accuracy and stability of quality at low cost.

### Citation List

### Patent Literature

Patent Literature 1: JP 2016-217898 A
Patent Literature 2: JP 2019-86554 A

### Summary of Invention

### Technical Problem

The present invention has been made to cope with the problems with the conventional art as mentioned above and thus provides a magnetostrictive torque sensor shaft with excellent processing accuracy and stability of quality and a method which enables to manufacture the magnetostrictive torque sensor shaft at low cost.

### Solution to Problem

The inventors have made efforts to conduct various study and research on the magnetostrictive torque sensor shaft with excellent processing accuracy and stability of quality and a means which enables to manufacture the magnetostrictive torque sensor shaft at low cost. As the result, they have found that the manufacture of such a magnetostrictive torque sensor shaft at low cost can be achieved by using a laser irradiation method, instead of the conventional shot blasting method, in the surface roughening process prior to amorphous thermal spraying (preprocessing) and the pattern formation process after the amorphous thermal spraying (postprocessing).

Particularly, the magnetostrictive torque sensor shaft of the present invention has a magnetostrictive region for torque detection on the surface of the shaft (axis of rotation), and is characterized by including an amorphous thermal spray coating that has the magnetostrictive property and is formed by thermal spraying, on the surface of the substrate that is made of a metal material and subjected to surface roughening by laser irradiation.

In addition, the method of manufacturing a magnetostrictive torque sensor shaft of the present invention is a manufacturing method for the magnetostrictive torque sensor shaft having a magnetostrictive region for torque detection on the surface of the shaft (axis of rotation), and the method is characterized by including processes of surface roughening by laser irradiation on the surface of the substrate made of a metal material prior to amorphous thermal spraying, subjecting the substrate surface roughened by the laser irradiation to the amorphous thermal spraying, and thereafter, pattern formation by the laser irradiation as with the surface roughening.

A metal material such as aluminum, copper, carbon steel, and stainless steel may be used as the substrate used in the present invention.

The followings are reasons why the present invention employs the laser irradiation, instead of the conventional shot blasting with aluminum powder, on the surface roughening process prior to amorphous thermal spraying (preprocessing) and the pattern formation process after the amorphous thermal spraying (postprocessing).

That is, when the conventional shot blasting with aluminum powder is employed, it requires much time to perform the surface roughening process prior to amorphous thermal spraying (preprocessing), in particular, to perform the surface processing to improve adhesion (anchor effect) required for formation of the amorphous thermal spray coating on the surface of the substrate. Additionally, it is difficult to obtain a surface texture with accuracy and stability due to variation in a finished surface of the substrate depending on the radiated state of the shot blasting by a shot blasting gun. In contrast, when the laser irradiation is employed, it has the advantage that an appropriately roughened surface can be formed on the surface of the substrate in a short time only by adjusting the output and moving velocity of the laser and furthermore a finished surface of the substrate is good and the surface texture with accuracy and stability is achieved. Besides, there are further problems with the case of the use of the shot blasting with aluminum powder as follows: it requires a lot effort and time on attachment and removal of masking sheets and disposal of removed-and-discarded sheets in the pattern formation process after the amorphous thermal spraying (postprocessing); it is uneconomical due to generation of waste including the discarded masking sheets since the aluminum powder is repeatedly used and thus worn, thereby the particles of the aluminum powder become smaller than the given particle size, which causes loss in the shot blasting capability, and consequently, the aluminum powder is discarded as waste; and it requires a shot blasting device as well as attachment and removal devices for the masking sheets, and therefore the cost of the equipment is high. On the other hand, the use of the laser irradiation allows saving the cost for the masking sheets since the masking sheets become unnecessary, allows simplification of the equipment since the shot blasting device and the attachment and removal devices for the masking sheets become unnecessary, and thereby allows to omit the attachment and removal work for the masking sheets, resulting in reduction of the postprocessing time and the waste. This makes it possible to manufacture the magnetostrictive torque sensor shaft with excellent processing accuracy and stability of quality at a low cast. In addition, the present invention that produces many advantageous effects as described above can also contribute to Goal 12 "Ensure sustainable consumption and production patterns" in Sustainable Development Goals (SDGs) led by the United Nations.

### Advantageous Effects of Invention

The present invention provides a magnetostrictive torque sensor shaft having an advantageous feature which brings excellent stability of quality, compared with the conventional magnetostrictive torque sensor shaft in which surface roughening is performed using shot blasting. This is because the present invention performs surface roughening using a laser irradiation prior to thermal spraying to provide a surface property with high accuracy and stability on the surface of a substrate, and on the substrate surface, an amorphous thermal spray coating having a superior magnetostrictive property is then coated. Furthermore, a method of manufacturing the magnetostrictive torque sensor shaft according to the present invention produces the significant effects that can manufacture the magnetostrictive torque sensor shaft with excellent processing accuracy and stability of quality at a low cost since the laser irradiation is employed on the surface roughening prior to thermal spraying, which makes it possible to save cost of masking sheets, simplify equipment thanks to needlessness of a shot blasting device and attachment and removal devices for masking sheets, omit the attachment and removal work for the masking sheets, and shorten the time required for the postprocessing.

### Brief Description of Drawings

Fig. 1 is a flowchart illustrating main process steps in one example of the method for manufacturing a magnetostrictive torque sensor shaft according to the present invention.

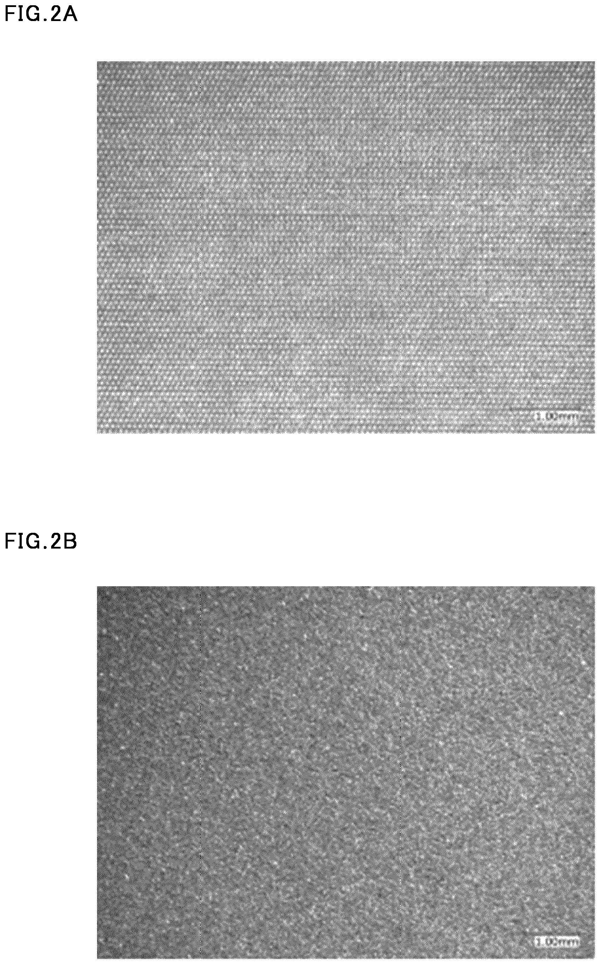

Figs. 2A and 2B are processed sample images showing each surface condition after surface roughening (preprocessing) on the surface of a substrate in the method for manufacturing a magnetostrictive torque sensor shaft according to the present invention and the conventional method for manufacturing a magnetostrictive torque sensor shaft, respectively: Fig. 2A showing the surface condition after the substrate surface is subjected to surface roughening by laser irradiation according to the present invention; and Fig. 2B showing the surface condition after the substrate surface is subjected to the conventional surface roughening by shot blasting.
Fig. 3 is an enlarged schematic view of a part of appearance of the magnetostrictive torque sensor shaft after coating film removal (postprocessing) by laser irradiation according to the present invention.
Fig. 4 is a vertical sectional view showing the general structure of a magnetostrictive torque sensor shaft which is one example of the present invention.

### Description of Embodiments

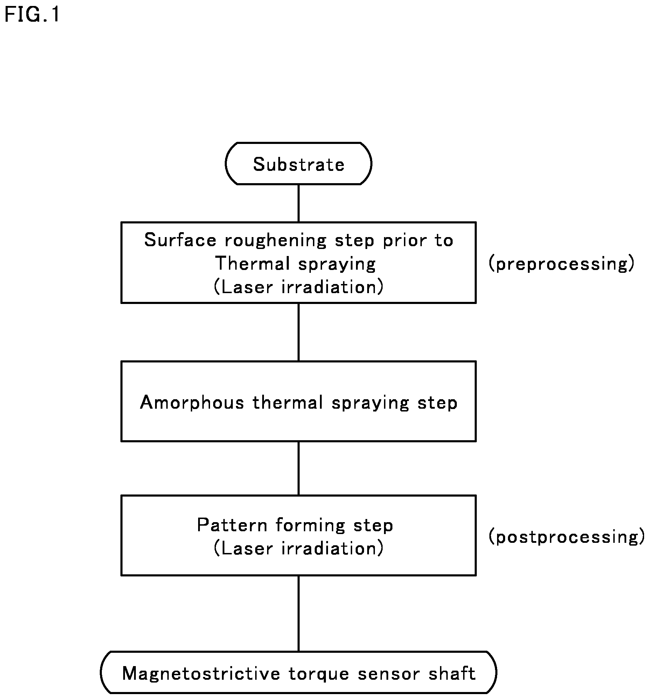

The method of manufacturing a magnetostrictive torque sensor shaft of the present invention includes a surface roughening step (preprocessing), an amorphous thermal spraying step, and a pattern forming step (postprocessing), as illustrated in the flowchart of the manufacturing method of the magnetostrictive torque sensor shaft according to a preferred embodiment of the present invention in Fig. 1. In the surface roughening step prior to the thermal spraying, a laser irradiation is employed, instead of the conventional shot blasting with aluminum powder, on the surface roughening step (preprocessing) which is performed on the surface of a substrate (a metal material including aluminum, copper, carbon steel, and stainless steel), to improve adhesion (anchor effect) required for formation of an amorphous thermal spray coating on the surface of the substrate. In the amorphous thermal spraying step, an amorphous which is a magnetic material is subjected to thermal spraying on the surface of the roughened substrate to form a magnetostrictive region. In the pattern forming step (postprocessing), the amorphous thermal spray coating film formed by the amorphous thermal spraying step is partially removed by the laser irradiation from the substrate so as to form a desired pattern of the coating film.

That is, the method of manufacturing a magnetostrictive torque sensor shaft of the present invention uses the laser irradiation, instead of the conventional shot blasting with aluminum powder, in the surface roughening process (preprocessing) prior to the amorphous thermal spraying and in the pattern formation process (postprocessing) after the thermal spraying to achieve a magnetostrictive torque sensor shaft with superior processing accuracy and stability of quality and manufacture the shaft at low cost. The use of laser irradiation enables not only improvement in adhesion (anchor effect) required for formation of an amorphous thermal spray coating on the surface of the substrate, but also formation of an appropriately roughened surface within a short time just by adjusting the laser output, the moving velocity of the laser, and the like in the surface roughening process (preprocessing) prior to the thermal spraying, resulting in achievement of a well-finished surface of the substrate and a surface texture with accuracy and stability. In particular, regarding the finished condition (roughness) of the substrate surface, it is clearly seen from the processed sample images of Figs. 2A and 2B that the surface condition (photo image 2A) which was obtained by the surface roughening process using the laser irradiation according to the present invention, shows that the finished surface of the substrate is good and the surface texture has significantly high reproducibility and uniformity, compared with the surface condition (photo image 2B) which was obtained by the surface roughening process using the conventional shot blasting.

The below is each surface roughness (measured by a prescribed roughness measurement) of the processed sample images showing the surface conditions in Figs. 2A and 2B.
(1) Sample image 2A processed with laser irradiation

| | |
|---|---|
| Ra (roughness in the wide direction): | 9.611 µm |
| Ra (roughness in the lengthwise direction) : | 9.426 µm |

(2) Sample image 2B processed with shot blasting

| | |
|---|---|
| Ra (roughness in the wide direction): | 2.467 µm |
| Ra (roughness in the lengthwise direction): | 2.683 um |

As for the postprocessing included in the manufacturing method of the magnetostrictive torque sensor shaft of the present invention, the amorphous thermal spray coating film is partially removed by the laser irradiation from the substrate in the pattern forming step to form a desired pattern (design) of the coating film. In doing so, the pattern formation is carried out while controlling a reasonable amount of rotation angle of the substrate depending on the progress of the pattern formation by laser irradiation. The process makes it possible to achieve the magnetostrictive torque sensor shaft on which the desired pattern (design) of the coating film is formed. Fig. 3 illustrates a part of appearance of the magnetostrictive torque sensor shaft having the desired pattern (design) of the coating film. Reference sign 1 denotes the magnetostrictive torque sensor shaft, reference sign 2 denotes slits, and reference sign 3 denotes the magnetostrictive region.

As described above, the method of manufacturing the magnetostrictive torque sensor shaft of the present invention employs laser irradiation on the surface roughening process (preprocessing) prior to the thermal spraying and in the pattern formation process (postprocessing) after the amorphous thermal spraying, which makes it possible to produce the advantageous effects that can form the appropriately roughened surface on the substrate within a short time just by adjusting the laser output and the moving velocity of the laser and can obtain a well-finished surface of the substrate and a surface texture with accuracy and stability, and furthermore can save costs of masking sheets thanks to needlessness of the masking sheets, simplify equipment thanks to needlessness of the attachment and removal devices for masking sheets, and omit the attachment and removal work for the masking sheets in the pattern formation process (postprocessing), and thus shorten the time required for the postprocessing, thereby achieving in manufacture of the magnetostrictive torque sensor shaft with excellent processing accuracy and stability of quality at a low cost.

It goes without saying that laser processing which is performed as preprocessing in the present invention is not limited to the case where the magnetostrictive region is formed by thermal spraying, can be also applied to cases where a magnetostrictive region is formed by any ways other than thermal spraying.

### Reference Signs List

- 1: Magnetostrictive torque sensor shaft
- 2: Slit
- 3: Magnetostrictive region

## Claims

1. A magnetostrictive torque sensor shaft having a magnetostrictive region for torque detection on a surface of the shaft, wherein
the magnetostrictive torque sensor shaft comprises an amorphous thermal spray coating on the surface of a substrate made of a metal material, the amorphous thermal spray coating having a magnetostrictive property and being formed by thermal spraying, the surface of the substrate being subjected to surface roughening by laser irradiation.

2. A method of manufacturing a magnetostrictive torque sensor shaft having a magnetostrictive region for torque detection on a surface of the shaft, the method comprising processes of:
surface roughening by laser irradiation on the surface of a substrate made of a metal material prior to amorphous thermal spraying;
subjecting the surface of the substrate roughened by the laser irradiation to the amorphous thermal spraying; and thereafter
pattern formation by the laser irradiation as with the surface roughening.
